# EUROPEAN PATENT APPLICATION

(11) **EP 4 796 242 A2**
(43) Date of publication of application: **26.08.2026**
(21) Application number: 26382207.4
(22) Date of filing: 20.02.2026
(51) Int. Cl.: B21D 43/14, B65G 47/252

(54) **PROCESSING INSTALLATION FOR ASSEMBLIES OF WELDED SHEET METAL FORMATS**

(30) Priority: 20.02.2025 ES 202530135
(71) Applicant: Sanchez Facerías, Tomás, 50016 Zaragoza (ES)
(72) Inventor: Sanchez Facerías, Tomás, 50016 Zaragoza (ES)
(74) Representative: Herrero & Asociados, S.L.

(57) **Abstract**

The installation is composed of a defective part separator, a lower conveyor belt, a turning device and a stacking unit. The turning device is constituted from a sheet feeding and displacement mechanism in which manipulators (41) are included, in which articulated arms participate about horizontal shafts (42) perpendicular to the direction of displacement of the sheet metal formats and finished at their opposite end in a magnetic or pneumatic assembly (43) for picking up the sheet metal formats. For their part, the horizontal shafts (42) are linked to one another by respective toothed wheels for synchronizing the displacement in a symmetrical manner.

## Description

### FIELD OF THE ART

The present invention relates to a processing installation for assemblies of welded sheet metal formats, intended to be installed downstream of a centering manipulator unit of a preceding process.

The object of the invention is to provide a fully automated installation capable of separating defective formats and selectively turning them over or not, arranging, positioning and stacking the valid formats onto the corresponding pallets, all of the foregoing being performed entirely automatically.

### BACKGROUND OF THE INVENTION

Continuous laser welding machines for sheet metal are known, some more complex and others simpler, such as that described in Spanish patent application P202231080, owned by the present applicant, which discloses a clamping device for parts intended for continuous laser welding, usable in continuous laser welding lines.

The formats continuously fed by this machine are analysed in order to subsequently separate those that are defective from those that are not, and to turn them over or not as required, for loading/stacking onto the corresponding pallets. This process differs from other processes currently carried out using robots in that it does not use robots at all. It is entirely electromechanical and occupies a substantially smaller surface area.

### DISCLOSURE OF THE INVENTION

The processing installation for assemblies of welded sheet metal formats proposed by the invention satisfactorily solves the above-mentioned problem by means of a highly effective solution.

The installation comprises five fundamental components: a defective format extractor, a turning device, a positioning unit, a stacking unit, and an automatic pallet changer.

Downstream of the centering manipulator of the continuous laser welding line, a defective part separator is arranged, followed by a lower conveyor belt feeding a turning device, which in turn feeds a stacking unit.

More specifically, the defective part separator comprises a frame on which a driven roller conveyor is arranged. The rollers receive the formats from a preceding process and convey them to a subsequent toothed belt conveying system.

Above said rollers, in an upper horizontal plane and at a short but sufficient distance there from, a set of magnetic belts arranged parallel to one another is provided, with a certain inclination such that the velocity component parallel to that of the remaining non-defective formats (longitudinal axis X of the machine) is maintained, while a transverse velocity component perpendicular thereto (transverse axis Y of the machine) is generated, thereby allowing selective extraction of the formats one by one. When a format is extracted, it maintains, relative to the moving belts, the position previously occupied, without interfering with the possible extraction of preceding or subsequent formats.

The formats transported by these magnetic belts are discharged laterally from the line for appropriate handling.

Above the magnetic belts and arranged between them there is provided a pick-up system comprising a series of magnets vertically movable to collect defective formats and raise them to the magnetic belts. The magnets can be activated or deactivated as required. The pick-up magnets may be positioned longitudinally between the magnetic belts by means of spindles and servomotors in order to adapt their position to the shape and size of the formats to be extracted.

Downstream of the roller path there is arranged a multiple belt conveying system on which the turning device is positioned. The formats that have passed quality control move on said conveyor belts beneath the turning device, which may turn them over or not depending on the requirements of subsequent stacking.

The turning device consists of equipment intended to turn the formats moving continuously or discontinuously along the horizontal conveyor.

It is arranged above the multiple belt conveyor and, when activated, it collects the formats from said conveyor and returns them thereto in a turned condition and at a more advanced position along the same conveyor.

Until now, this process was carried out by means of two robots arranged such that one of them takes one or more formats from the conveyor, lifts them and delivers them to the other robot, which takes them from the opposite side and deposits them again onto the conveyor in such a way that the face previously facing downward now faces upward, and vice versa. The drawback of the robotic system lies in the large surface area required for installation and in the considerable conveyor length needed.

The advantages of the proposed turning device lie in its small footprint and in the fact that it can be mounted in existing installations, provided that the conveyor length allows it, since the assembly is entirely arranged above and around the conveyor.

Finally, the installation includes a stacking unit such that the formats arrive, by means of the conveyor belts, at a set of adjustable stops which stop and position the formats one by one in the manner required for stacking.

In an upper plane above and parallel to the preceding conveyor system there is arranged an extraction mechanism comprising a set of magnets which can be activated or deactivated as required and which are vertically movable in order to raise the formats and deliver them to upper magnetic stacking belts.

The fundamental advantage of the upper extraction mechanism by means of permanent magnets is that, compared to other systems that push the formats from below by means of pneumatic cylinders or equivalent systems, the proposed system raises the formats, leaving the lower space above the belts free as soon as the movement begins for the arrival of the immediately following format, whereas lower pushing systems block the format or formats being processed and prevent the passage of subsequent formats.

The magnetic stacking belts advance intermittently by the separation distance necessary to place the formats on the pallet in the correct position, loading one or more formats at a time.

Once all the formats of one row have been loaded, the belts advance to the discharge position and, while a new format is being raised, they discharge the previously prepared formats.

Arranged between and/or laterally of the belts and parallel thereto are magnetic strips of the necessary length, pneumatically activatable and arranged in a common horizontal plane, which are vertically movable by a common upper drive for transferring the formats from the upper magnetic belts to the collection pallet, depositing them either directly on the pallet or on a previously deposited format.

Finally, the collection pallets are arranged on a transverse platform with space for three pallets, such that the central position is used for loading and, on both sides, there are provided a waiting zone with an empty pallet ready for loading and a discharge zone ready to receive the full pallet awaiting removal by a forklift truck.

In this manner, an installation is achieved that allows full automation of the process.

### BRIEF DESCRIPTION OF THE DRAWINGS

To complement the description that follows and to facilitate a better understanding of the characteristics of the invention, a set of drawings is attached as an integral part of said description, in which, by way of illustration and not limitation, the following is represented:
Figure 1 shows a plan view of a processing installation for assemblies of welded sheet metal formats according to the object of the present invention.
Figure 2 shows a side view of the double format turning mechanism.
Figures 3 to 6 show respective side views of one of the arms participating in the mechanism of Figure 2 in different operative positions.

### PREFERRED EMBODIMENT OF THE INVENTION

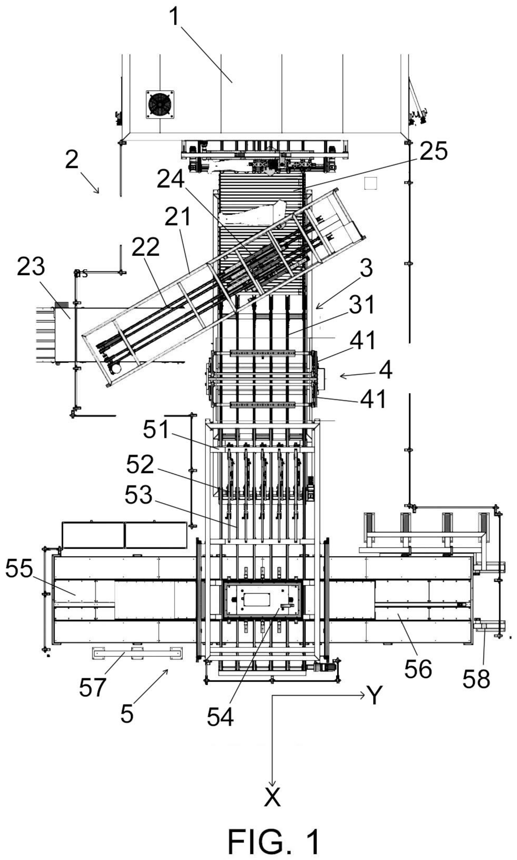

With reference to the figures mentioned above, and particularly to Figure 1, the installation of the invention is intended to be arranged downstream of the centering manipulator (1) of a continuous laser welding line, four mechanisms operating continuously being established, namely:
- A defective part separator (2);
- Lower conveyor belts or toothed belts (3);
- A turning device (4);
- A stacking unit (5).

The defective part separator (2) comprises a frame (21) arranged over a driven roller conveyor (25). The rollers receive the formats from a preceding process and convey them to the lower toothed belt conveying system (3).

Above said rollers, in an upper horizontal plane and at a short but sufficient distance there from, a set of four magnetic belts (22) arranged parallel to one another is provided, forming an angle relative to the horizontal direction of displacement of the formats (axis X), for example 45°, although this angle may vary without affecting the essence of the invention.

In this way, the velocity component of the extraction belts along axis X is equal to the displacement velocity of the formats along the same axis X on the driven roller conveyor (25). This allows a format, when extracted, to maintain, relative to the moving belts, the position it previously occupied, without interfering with the possible extraction of preceding or subsequent formats.

This enables extraction of all and only those formats that have been selectively classified as non-valid by the quality control system.

The formats conveyed by these magnetic belts are discharged laterally from the line onto a defective part collecting belt (23).

Above the magnetic belts and arranged between them there is provided a pick-up system comprising a series of magnets (24) vertically movable to collect defective formats and raise them to the magnetic belts. The magnets can be activated or deactivated as required.

The position of the magnets between and along the belts is variable and must be suitably arranged for the extraction of each format.

The arrangement is established according to the corresponding programming parameters, and a set of servomotors positions them in the correct location.

The carriages supporting the magnets (24) move by means of ball slides along corresponding guides via spindles driven by said servomotors.

A control cabinet houses a safety PLC, servomotor drives, and input/output cards receiving signals from sensors and controlling pneumatic solenoid valves and servomotors in accordance with commands received from the quality control system and from a main control cabinet.

The lower toothed belts (3) are arranged downstream of the driven roller conveyor (25) of the defective part separator (2).

The non-defective formats are conveyed by means of a multiple toothed belt conveyor (31), which passes beneath the turning device (4) and reaches the positioning stop system (51) of the stacking unit (5).

The turning device (4) is arranged above the multiple toothed belt conveyor (31). When activated, it collects the formats (6) from said conveyor and returns them thereto in a turned condition and at a more advanced position along the same conveyor.

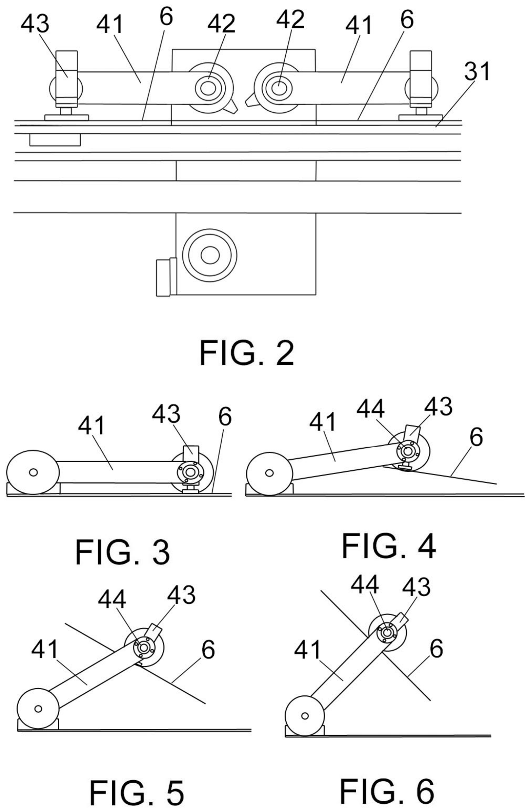

According to Figures 2 to 6, the turning device comprises two manipulators (41), arranged such that one of them takes one or more formats from the conveyor, lifts them while turning them over and transfers them to the other manipulator, which takes them from the opposite side and deposits them again on the conveyor in such a way that the face previously facing downward now faces upward, and vice versa.

The mechanism comprises two parallel arms joined at one of their ends by a horizontal shaft (42), perpendicular to the conveying direction of the formats and arranged at a certain distance above the conveying plane of the formats, allowing said arms to rotate through an arc of 90° between a horizontal position and a vertical position. The horizontal shafts (42) are linked to one another by respective toothed wheels ensuring symmetrical synchronised movement.

A magnetic or pneumatic gripping assembly (43) for gripping the formats is arranged at the free ends of the arms and includes a mechanism (44) that rotates the formats (6) from the horizontal position in which they are gripped to the vertical position in which they are transferred to an identical and symmetrical system which, taking them from the vertical position, deposits them in a horizontal position on the conveyor at a more advanced location.

Finally, the installation includes a stacking mechanism (5), shown in Figure 1.

The formats arrive on the conveyor belts (32) at a set of adjustable stops (51), each independently actuated by a servomotor, which stop and position the formats one by one.

In an upper plane above and parallel to the preceding conveyor system there is provided an extraction system (52), comprising a set of magnets selectively activated or deactivated depending as needed and vertically movable by pneumatic cylinders in order to raise the formats and deliver them to upper magnetic stacking belts (53).

The magnets are moved vertically by pneumatic cylinders to lift the formats from the lower transport to the upper transport system of the stacker.

The position of these magnets relative to axis X (longitudinal axis of the machine) is variable and must be suitably arranged for the extraction of each format. The arrangement is established according to the corresponding programming, and the drives individually position each lifting magnet in the correct location.

The carriages supporting these magnets move by means of ball slides along corresponding guides via spindles driven by the respective actuators, without ruling out any other conventional mechanism or system.

The magnetic stacking belts advance intermittently by the separation distance necessary to place the formats on the pallet in the correct position.

Once all the formats of one row have been loaded, the belts advance to the discharge position and, while a new format is being raised, discharge the previously prepared formats.

Arranged between and/or laterally of the belts and parallel thereto are magnetic strips of the necessary length, pneumatically activatable and arranged in a common horizontal plane, which are vertically movable by a common upper drive for transferring the formats from the upper magnetic belts to the collection pallet, depositing them either directly on the pallet or on a previously deposited format.

The collection pallets are arranged on a transverse platform (54) extending along axis Y of the machine, said platform being provided centrally and along its entire length with a channel of sufficient width to accommodate the pallet changing and transport system.

The platform (54) has space for three pallets. In its central position loading takes place, and on both sides there are arranged: a waiting zone (55) with an empty pallet (57) ready for loading; and a discharge zone (56) ready to receive the pallet loaded with formats, awaiting removal by a forklift truck.

The pallets (57) are moved by means of two carriages, one arranged beneath the empty pallet and the other beneath the loaded pallet, said carriages moving horizontally together by means of a geared servomotor driving a rack-and-pinion system (58).

Said carriages are capable of moving freely beneath the respective pallets through the central channel without moving them, and each includes an independent lifting system allowing it to raise the empty or loaded pallet located above it.

In this manner, the carriages lift the pallet sufficiently to separate its base from the platform on which it was resting and, by displacing them, move the empty pallet to the loading position and the loaded pallet to the discharge position. The carriages are then lowered to retract into the central channel and return to their initial position, ready for the next maneuver.

## Claims

1. Turning device for welded sheet metal formats, **characterized in that** it is constituted by a sheet feeding and displacement mechanism including manipulators (41) in which arms are articulated about horizontal shafts (42) perpendicular to the conveying direction of the sheet metal formats and provided at their opposite ends with a magnetic or pneumatic assembly (43) for gripping the sheet metal formats, with the particularity that the horizontal shafts (42) are linked to one another by respective synchronizing toothed wheels ensuring symmetrical movement.

2. Processing installation for assemblies of welded sheet metal formats, intended to be installed downstream of a preceding process including a centering manipulator (1),**characterized in that** it comprises a defective part separator (2), lower conveyor belts or toothed belts (3), a turning device (4) and a stacking unit (5), wherein:
a) the defective part separator (2) comprises a frame (21) arranged on a driven roller conveyor (25) situated downstream of the centering manipulator (1) and conveying the parts to a toothed belt conveying system, said driven roller conveyor (25) having, in an upper horizontal plane, a set of magnetic belts (22) arranged parallel to one another and forming an angle with the conveying direction of the driven roller conveyor (25), a defective part discharge zone (23) being provided at one side of the line;
b) The lower conveyor belts or toothed belts (3) are arranged downstream of the driven roller conveyor (25) of the defective part separator (2), including a multiple toothed belt conveyor (31) passing beneath the turning device (4) and reaching a positioning stop system (51) provided in the stacking unit (5);
c) the stacking unit (5) includes, in correspondence with the conveyor belts (32), a positioning stop system (51) and, above said conveyor and parallel thereto, an extraction system (52) comprising selectively activatable magnets vertically movable and displaceable by means of carriages, associated with upper magnetic stacking belts (53) movable towards a discharge zone constituted by a transverse platform (54) defining a central pallet loading space and, at its sides, a waiting zone (55) with an empty pallet (57) ready for loading and, on the opposite side, a discharge zone (56) ready to receive the pallet loaded with parts.

3. Processing installation for assemblies of welded sheet metal formats according to claim 2,wherein the magnetic belts of the defective part separator (2) include a series of magnets (24) vertically movable according to the corresponding programming parameters by means of a set of servomotors, carriages supporting the magnets (24) being displaceable by means of ball slides along corresponding guides via spindles driven by the servomotors.

4. Processing installation for assemblies of welded sheet metal formats according to claim 2,wherein in the stacking unit (5) the pallets (57) are displaced by two carriages, one arranged beneath the empty pallet and the other beneath the loaded pallet, said carriages being horizontally movable together by means of a geared servomotor driving a rack-and-pinion system (58), and including an independent lifting system.

5. Processing installation for assemblies of welded sheet metal formats according to claim 2, wherein the installation includes a control cabinet including a safety PLC, servomotor drives and input/output cards receiving sensor signals and controlling pneumatic solenoid valves and the servomotors according to commands received from the quality control system and from a main control cabinet.
